# EUROPEAN PATENT APPLICATION

(11) **EP 4 611 345 A1**
(43) Date of publication of application: **03.09.2025**
(21) Application number: 23881657.3
(22) Date of filing: 13.10.2023
(51) Int. Cl.: H04L 47/76

(54) **BANDWIDTH ADJUSTMENT METHOD, SYSTEM AND DEVICE, AND STORAGE MEDIUM**

(30) Priority: 25.10.2022 CN 202211312177
(71) Applicant: Cloud Intelligence Assets Holding (Singapore) Private Limited, Singapore 189554 (SG)
(72) Inventor: LUO, Qingchao, Chengdu, Sichuan 610095 (CN)
(74) Representative: Barker Brettell LLP
(86) International application number: PCT/CN2023/124391
(87) International publication number: WO 2024/088078

(57) **Abstract**

Embodiments of this application provide a bandwidth adjustment method, a system, a device, and a storage medium. Statistics may be performed on property description information of computing nodes currently accessing a data lake, and expected bandwidth quantities of the respective computing nodes may be predicted; under each storage unit in the data lake, a total expected bandwidth quantity corresponding to computing nodes currently carried by the storage unit may be calculated, and a bandwidth quota of the storage unit may be adjusted according to the total expected bandwidth quantity and a current actual bandwidth quantity of the storage unit. **In** this way, a bandwidth adjustment system, serving as an intermediary between the computing nodes and the data lake, can perceive dynamic bandwidth requirements of the computing nodes accessing the data lake in real time, and can adjust bandwidth quotas of storage units in the data lake based on the perceived dynamic bandwidth requirements. Accordingly, the bandwidth quotas of the respective storage units in the data lake can be dynamically adjusted, so that bandwidth quantities provided by the storage units in the data lake are adapted to the bandwidth requirements of the computing nodes, thereby providing bandwidths for the computing nodes accessing the data lake more reasonably.

## Description

This application claims priority to Chinese patent application No. 202211312177.6, filed with the China National Intellectual Property Administration on October 25, 2022 and entitled "BANDWIDTH ADJUSTMENT METHOD, SYSTEM, DEVICE, AND STORAGE MEDIUM", which is hereby incorporated by reference in its entirety.

### TECHNICAL FIELD

The present application relates to the technical field of cloud computing and, in particular, to a bandwidth adjustment method, a system, a device, and a storage medium.

### BACKGROUND

A data lake (Data Lake) can be interpreted as a highly-scalable data storage area that stores a large quantity of raw data in a raw format until it needs to be used. The data lake can store all types of data, with no fixed limit on the size of account or the file, and no specific defined use. The data comes from different sources, and may be structured, semi-structured, or even unstructured. The data can be queried on demand. The data lake can be seamlessly connected to a variety of computing-analyzing platforms. Depending on different use scenarios, corresponding computing engines can be selected to perform data processing and analysis on the data stored in the data lake, so as to break the island and dig into the business value.

A bandwidth is an important resource for the data lake. Currently, a data lake usually provides a bandwidth according to a storage quantity. For example, if a storage quantity of a tenant in a data lake is 16TB, a bandwidth capacity of 100MBps is provided to the tenant by default. However, this is too rigid for the tenant of the data lake, and it cannot meet flexible and changeable bandwidth requirements of the tenant. There are often problems, such as redundant and wasteful, or insufficient, bandwidth quantity provided to the tenant, affecting the data analysis efficiency of the tenant.

### SUMMARY

Multiple aspects of the present application provide a bandwidth adjustment method, a system, a device, and a storage medium, so as to provide bandwidths for computing nodes accessing a data lake more reasonably.

An embodiment of the present application provides a bandwidth adjustment method, including:
performing statistics on property description information of computing nodes currently accessing a data lake from received access requests by the data lake;
predicting expected bandwidth quantities of the computing nodes based on the property description information respectively;
using the expected bandwidth quantities as a basis, to determine, under a storage unit in the data lake, a total expected bandwidth quantity corresponding to computing nodes currently carried by the storage unit, and to adjust a bandwidth quota according to the total expected bandwidth quantity and a current actual bandwidth quantity of the storage unit.

An embodiment of the present application further provides a bandwidth adjustment method, including:
obtaining expected bandwidth quantities predicted for computing nodes currently accessing a data lake, where the expected bandwidth quantities are predicted based on property description information of the computing nodes;
calculating, under each of storage units in the data lake, a total expected bandwidth quantity corresponding to computing nodes currently carried by the each of the storage units;
obtaining a current actual bandwidth quantity of each of the storage units;
adjusting, under each of the storage units, a bandwidth quota according to the actual bandwidth quantity and the total expected bandwidth quantity.

An embodiment of the present application further provides an electronic device, including a memory and a processor;
the memory is configured to store one or more computer instructions;
the processor is coupled to the memory, and is configured to execute the one or more computer instructions to:
   perform statistics on property description information of computing nodes currently accessing a data lake from received access requests by the data lake;
   predict expected bandwidth quantities of the computing nodes based on the property description information respectively;
   use the expected bandwidth quantities as a basis, to determine, under a storage unit in the data lake, a total expected bandwidth quantity corresponding to computing nodes currently carried by the storage unit, and to adjust a bandwidth quota according to the total expected bandwidth quantity and a current actual bandwidth quantity of the storage unit.

An embodiment of the present application further provides an electronic device, including a memory and a processor;
the memory is configured to store one or more computer instructions;
the processor is coupled to the memory, and is configured to execute the one or more computer instructions to:
   obtain expected bandwidth quantities predicted for computing nodes currently accessing a data lake, where the expected bandwidth quantities are predicted based on property description information of the computing nodes;
   calculate, under each of storage units in the data lake, a total expected bandwidth quantity corresponding to computing nodes currently carried by the each of the storage units;
   obtain a current actual bandwidth quantity of each of the storage units;
   adjust, under each of the storage units, a bandwidth quota according to the actual bandwidth quantity and the total expected bandwidth quantity.

An embodiment of the present application further provides a bandwidth adjustment system, including:
a statistics node applying the aforementioned bandwidth adjustment method, and a dynamic adjustment node applying the aforementioned bandwidth adjustment method; where the statistics node provides the expected bandwidth quantities predicted for the computing nodes accessing the data lake to the dynamic adjustment node, so that the dynamic adjustment node adjusts the bandwidth quota for the storage unit in the data lake.

An embodiment of the present application further provides a computer-readable storage medium storing computer instructions, and when the computer instructions are executed by one or more processors, the one or more processors are caused to perform the aforementioned bandwidth adjustment method.

In the embodiments of the present application, a bandwidth adjustment system applied to a data lake scenario is provided, where statistics may be performed on property description information of computing nodes currently accessing a data lake, and expected bandwidth quantities of the respective computing nodes may be predicted; under each storage unit in the data lake, a total expected bandwidth quantity corresponding to computing nodes currently carried by the storage unit may be calculated, and a bandwidth quota of the storage unit may be adjusted according to the total expected bandwidth quantity and a current actual bandwidth quantity of the storage unit. In this way, the bandwidth adjustment system, serving as an intermediary between the computing nodes and the data lake, can perceive dynamic bandwidth requirements of the computing nodes accessing the data lake in real time, and can adjust bandwidth quotas of storage units in the data lake based on the perceived dynamic bandwidth requirements. Accordingly, in the embodiments of the present application, the bandwidth adjustment system can dynamically adjust the bandwidth quotas of the respective storage units in the data lake, so that bandwidth quantities provided by the storage units in the data lake are adapted to the bandwidth requirements of the computing nodes, thereby providing bandwidths for the computing nodes accessing the data lake more reasonably.

### BRIEF DESCRIPTION OF DRAWINGS

The drawings described herein are used to provide further understanding of the present application, and constitute a part of the present application. The exemplary embodiments of the present application and the description thereof are used to explain the present application, and do not constitute improper limitations to the present application. In the drawings:
FIG. 1 is a schematic structural diagram of a bandwidth adjustment system provided in an exemplary embodiment of the present application;
FIG. 2 is a schematic flow diagram of a bandwidth adjustment method provided in another exemplary embodiment of the present application;
FIG. 3 is a schematic flow diagram for a statistics stage provided in still another exemplary embodiment of the present application;
FIG. 4 is a schematic flow diagram for a dynamic adjustment stage provided in still another exemplary embodiment of the present application;
FIG. 5 is a schematic flow diagram for an execution stage provided in still another exemplary embodiment of the present application;
FIG. 6 is a schematic flow diagram of a bandwidth adjustment method provided in still another exemplary embodiment of the present application;
FIG. 7 is a schematic structural diagram of an electronic device provided in still another exemplary embodiment of the present application;
FIG. 8 is a schematic flow diagram of another bandwidth adjustment method provided in still another exemplary embodiment of the present application.

### DESCRIPTION OF EMBODIMENTS

In order to make the objectives, technical solutions and advantages of the present application clearer, the technical solutions of the present application will be clearly and completely described below with reference to specific embodiments of the present application and corresponding drawings. Obviously, the described embodiments are only a part of embodiments of the present application, rather than all of the embodiments. Based on the embodiments in the present application, all other embodiments obtained by those of ordinary skill in the art without making creative effort shall fall within the protection scope of the present application.

Currently, a data lake usually provides a bandwidth according to a storage quantity, which is too rigid to meet flexible and changeable bandwidth requirements of a tenant. Therefore, in some embodiments of the present application, a bandwidth adjustment system applied to a data lake scenario is provided, where statistics may be performed on property description information of computing nodes currently accessing a data lake, and expected bandwidth quantities of the respective computing nodes may be predicted; under each storage unit in the data lake, a total expected bandwidth quantity corresponding to computing nodes currently carried by the storage unit may be calculated, and a bandwidth quota of the storage unit may be adjusted according to the total expected bandwidth quantity and a current actual bandwidth quantity of the storage unit. In this way, the bandwidth adjustment system, serving as an intermediary between the computing nodes and the data lake, can perceive dynamic bandwidth requirements of the computing nodes accessing the data lake in real time, and can adjust bandwidth quotas of storage units in the data lake based on the perceived dynamic bandwidth requirements. Accordingly, in the embodiments of the present application, the bandwidth adjustment system can dynamically adjust the bandwidth quotas of the respective storage units in the data lake, so that bandwidth quantities provided by the storage units in the data lake are adapted to the bandwidth requirements of the computing nodes, thereby providing bandwidths for the computing nodes accessing the data lake more reasonably.

The technical solutions provided in the embodiments of the present application are described in detail below with reference to the drawings.

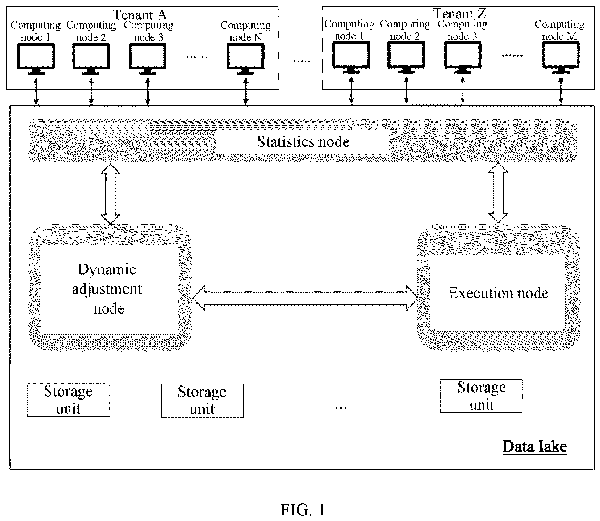

FIG. 1 is a schematic structural diagram of a bandwidth adjustment system provided in an exemplary embodiment of the present application. As shown in FIG. 1, the system includes: a statistics node and a dynamic adjustment node.

The statistics node is configured to: perform statistics on property description information of computing nodes currently accessing a data lake from received access requests by the data lake; and predict expected bandwidth quantities of the computing nodes based on the property description information respectively.

The dynamic adjustment node is configured to: calculate, under each of storage units in the data lake, a total expected bandwidth quantity corresponding to computing nodes currently carried by the each of the storage units; obtain a current actual bandwidth quantity of each of the storage units; and adjust, under each of the storage units, a bandwidth quota according to the actual bandwidth quantity and the total expected bandwidth quantity.

The bandwidth adjustment system provided in this embodiment can be applied to a data lake scenario, and provide a bandwidth adjustment solution for the data lake. A data lake can be interpreted as a highly-scalable data storage area, and the data lake can contain a large quantity of storage units, where a storage unit can be understood as the smallest unit for storage in the data lake. In different data lake products, the definition name of a storage unit may be different, and the storage unit may be a bucket (bucket), etc. The name, specification, storage form, and the like of the storage unit are not limited in this embodiment. In addition, an original flow control system (a system for managing bandwidth) of the data lake usually performs bandwidth control in units of storage units. For example, tenant A leases multiple buckets (buckets) in the data lake, and the flow control system may configure a fixed bandwidth for tenant A on each bucket according to the storage quantity on each bucket leased by tenant A.

The data lake can be seamlessly connected to a variety of computing-analyzing platforms. Depending on different analysis requirements, corresponding computing engines can be selected to perform data processing and analysis on the data stored in the data lake. At present, a data lake and a computing-analyzing platform usually belong to different operators, which makes it difficult to connect the two links of computing and storage. Therefore, a data lake can only configure a bandwidth for a tenant according to the storage quantity used by the tenant, which leads to the problem of unreasonable bandwidth configuration. It should be understood that a data lake generally cannot accurately perceive the bandwidth requirement of a tenant, and therefore cannot perform bandwidth configuration according to the bandwidth requirement of the tenant.

In order to solve this dilemma, this embodiment provides a bandwidth adjustment system, so that a data lake provides bandwidths for computing nodes more reasonably. In this embodiment, due to the flexible variability of the computing requirements of a tenant, the computing nodes accessing the data lake also dynamically change. Herein the dynamic change includes but is not limited to a change in the number of computing nodes, a change in the storage unit accessed by a computing node, and the like. Therefore, the bandwidth adjustment system provided in this embodiment can dynamically adjust the bandwidths provided by the data lake to the computing nodes as the computing nodes dynamically change. Considering that a computing node is essentially connected to a storage unit in the data lake, and computing nodes carried on the same storage unit functionally share the bandwidth provided on the storage unit, in this embodiment, it is proposed that the bandwidth quota of each storage unit in the data lake can be dynamically adjusted, so that the bandwidths obtained by the computing nodes carried on the storage unit can be indirectly adjusted.

In this embodiment, in order to avoid an introduction impact on the tenant side, all nodes included in the bandwidth adjustment system may be deployed inside the data lake. Of course, this embodiment is not limited thereto, and the nodes in the bandwidth adjustment system may also be deployed outside the data lake. In addition, considering that the number of access requests occurring in the data lake is huge, in order to ensure the efficiency of bandwidth adjustment, each node in the bandwidth adjustment system may be implemented as a node in a cloud. Of course, this embodiment is not limited thereto, and each node in the bandwidth adjustment system may also be implemented as a processing module in a computing device. This embodiment does not limit the physical implementation form of each node in the bandwidth adjustment system.

Referring to FIG. 1, in this embodiment, the statistics node may perform statistics on the property description information of the computing nodes currently accessing the data lake from the received access requests by the data lake. Here, the statistics node may be deployed in an original access layer of the data lake to more conveniently analyze the access requests received by the data lake. In addition, the statistics node may be implemented by using a distributed cluster, and the distributed cluster may include at least one control node and multiple working nodes that are managed and controlled by each control node. In a case that the number of the control nodes is one, the control node may take over all of the computing nodes accessed in the data lake; and in a case that the number of the control nodes is multiple, the multiple control nodes may be in charge of some computing nodes under different tenants, respectively. For example, there are three control nodes, namely a, b, and c. If there are 3 million tenants in the data lake, the 3 million tenants can be divided into three groups, and the three control nodes can respectively take over one of the groups. Each control node may call multiple working nodes under its control to complete the statistical work.

In this embodiment, the property description information for statistics may include, but is not limited to, an identifier of a belonged-to tenant, an identifier of an accessed storage unit, a node type, a node address, or the like. Certainly, the property description information may further include other information that can characterize the identity of the computing node or that is helpful for subsequently predicting an expected bandwidth quantity for the computing node, which is not limited. In addition, in this embodiment, a communication protocol may be pre-determined between the statistics node and the computing node, and the property description information required to be carried in the access request by the computing node is specified in the communication protocol. In this way, in the process of the computing node initiating the access request to the data lake, the property description information may be carried in the access request, so that the statistics node may parse out the property description information from the access request.

On this basis, the statistics node may predict the expected bandwidth quantities of the computing nodes based on the property description information respectively. In this embodiment, the statistics node and the computing node are connected, and the statistics node can obtain various parameters for bandwidth prediction. Therefore, the statistics node can easily and quickly predict the expected bandwidth quantities for the respective computing nodes currently accessing the data lake based on the obtained parameters. Here, in this embodiment, the prediction scheme used by the statistics node is not limited, and the prediction scheme may be flexibly set as required.

An exemplary prediction scheme may be: obtaining, based on a node type of any target node in the computing nodes, a hardware parameter of the target node; calculating a first predicted bandwidth quantity of the target node according to the hardware parameter; perceiving a type of an application that initiates a current access request on the target node; looking up a second predicted bandwidth quantity corresponding to a combination of the type of the application and the node type of the target node from a knowledge database; determining an expected bandwidth quantity corresponding to the target node according to the first predicted bandwidth quantity and the second predicted bandwidth quantity. Here, the hardware parameter may include, but is not limited to, the number of CPU cores, the number of memories, a network bandwidth capability, etc. In addition, the knowledge database may include bandwidth capability values that can be achieved when various applications run on different types of computing nodes. The bandwidth capability values in the knowledge database may be empirical values. On the basis of this, a suitable empirical value may be selected from the knowledge database as the second predicted bandwidth quantity.

In this exemplary prediction scheme, the expected bandwidth quantity can be calculated for the target node in combination with the hardware perspective and the software perspective. It should be understood that this is only an exemplary prediction scheme, and the scheme of predicting the expected bandwidth quantity for the computing node in this embodiment is not limited thereto.

It should be noted that, in this embodiment, the access requests received by the data lake may originate from multiple computing nodes and involve multiple tenants, and the computing nodes or tenants accessing the data lake may dynamically change. To this end, in this embodiment, the statistics node may periodically perform the statistical work and perceive these changes in time. In order to better perceive these changes, in an exemplary implementation: the statistics node may further maintain an access request statistical table, where the access request statistical table includes a field related to a property description and a field corresponding to an expected bandwidth quantity, and update dynamically the property description information and the expected bandwidth quantity of each of the computing nodes accessing the data lake in the access request statistical table. An exemplary access request statistical table is as follows,

**Table-1:**

| Tenant | Bucket | Computing node IP | Node type | Extended field | Expected bandwidth quantity |
|---|---|---|---|---|---|
| Tenant A | A-bucket 1 | 192.168.0.2 | I2 | Ordinary | 1Gbps |
| Tenant A | A-bucket 1 | 192.168.0.3 | I2 | Ordinary | 1Gbps |
| Tenant A | A-bucket 1 | 192.168.1.2 | G2 | Ordinary | 2Gbps |
| Tenant A | A-bucket 2 | 192.168.1.3 | G2 | Ordinary | 2Gbps |
| Tenant A | A-bucket 2 | 192.168.100.2 | D1 | Ordinary | 0.5Gbps |
| ... | ... | ... | ... | ... | ... |
| Tenant B | B-bucket 3 | 192.168.200.2 | G2 | Ordinary | 2Gbps |
| ... | ... | ... | ... | ... | ... |

Based on this, the statistics node may trigger the dynamic adjustment node in FIG. 1 to start working in a case of detecting a change in the access request statistical table. Here, the change in the access request statistical table refers to an increase or decrease of records in the table or a change of a value for a field in the table. The increase or decrease of the records indicates that elastic scaling has occurred on the computing nodes accessing the data lake, and the change of the value for the field may indicate that the access status of an existing computing node has changed. Of course, this is a preferred solution, which is not limited in this embodiment. The dynamic adjustment node may not be triggered by the statistics node, but may independently arrange its own working timing, for example, the dynamic adjustment node may also work periodically, etc.

Referring to FIG. 1, for the dynamic adjustment node, under each of the storage units in the data lake, the total expected bandwidth quantity corresponding to the computing nodes currently carried by the each of the storage units may be calculated. In other words, the dynamic adjustment node can convert the bandwidth requirements (expected bandwidth quantities of the computing nodes, etc.) under the node dimension or the tenant dimension perceived from the computing node side into the bandwidth demands under the storage units in the data lake, so as to realize the connection of the two links of computing and storage. Optionally, the dynamic adjustment node may calculate, under a target unit in the storage units, a sum of expected bandwidth quantities of all computing nodes currently carried by the target unit, and taking the sum as a total expected bandwidth quantity corresponding to the target unit. Generally, a single storage unit only carries computing nodes under one tenant. In this case, the dynamic adjustment node may sum the expected bandwidth quantities corresponding to all computing nodes currently carried by the storage unit, so as to obtain the total expected bandwidth quantity of the storage unit. For example, if five computing nodes of tenant A are currently carried on bucket B in the data lake, the expected bandwidth quantities respectively corresponding to these computing nodes may be summed to obtain the total expected bandwidth quantity of bucket B. A single storage unit may carry computing nodes under multiple tenants, and there may be bandwidth priority among tenants. In the process of bandwidth resource allocation, the tenants may also preempt the bandwidths according to the bandwidth priority, to obtain the bandwidth from the storage unit in proportion. In this case, the dynamic condition node may temporarily weaken the concept of tenant in the dynamic adjustment stage, and may sum as well the expected bandwidth quantities corresponding to all computing nodes currently carried by the storage unit, to obtain the total expected bandwidth quantity of the storage unit. Of course, the dynamic adjustment node may also calculate, under the storage unit, the respective total expected bandwidth quantities corresponding to the multiple tenants carried by the storage unit, in order to allocate the adjusted bandwidth resources of the storage unit according to the respective total expected bandwidth quantities corresponding to the multiple tenants in a subsequent process of the bandwidth resource allocation.

Referring to FIG. 1, the dynamic adjustment node may further obtain the current actual bandwidth quantity of each of the storage units. As mentioned above, a flow control system is originally deployed in the data lake, so the flow control system can be reused to measure the actual bandwidth of each of the storage units. The dynamic adjustment node may obtain the current actual bandwidth quantity of each of the storage units from the flow control system. Of course, this embodiment is not limited thereto, and the dynamic adjustment node may also autonomously measure the current actual bandwidth quantity of each of the storage units.

In addition, in this embodiment, the dynamic adjustment node may further obtain an original bandwidth quota of each of the storage units, where the original bandwidth quota refers to a bandwidth quota obtained by each of the storage units after the last dynamic adjustment operation. In the dynamic adjustment operation at this time, the bandwidth quota of each of the storage units will continue to be adjusted.

In an optional implementation, the dynamic adjustment node may maintain a dynamic adjustment record table, where the dynamic adjustment record table may include, but is not limited to, a tenant identifier field, a storage unit identifier field, an actual bandwidth quantity field, an original bandwidth quota field, and a total expected bandwidth quantity field. An exemplary dynamic adjustment record table is as follows,

**Table-2:**

| Tenant | Bucket | Actual bandwidth quantity | Original bandwidth quota | Total expected bandwidth quantity |
|---|---|---|---|---|
| Tenant A | A-bucket 1 | 20 | 20 | 40 |
| Tenant A | A-bucket 2 | 30 | 30 | 40 |
| ... | ... | ... | ... | ... |
| Tenant B | B-bucket 3 | 10 | 20 | 20 |
| Tenant B | B-bucket 4 | 10 | 20 | 20 |
| ... | ... | ... | ... | ... |
| Tenant C | C-bucket 5 | 30 | 40 | 40 |
| Tenant C | C-bucket 6 | 20 | 30 | 30 |
| ... | ... | ... | ... | ... |

On this basis, referring to FIG. 1, the dynamic adjustment node may further adjust, under each of the storage units, the bandwidth quota according to the actual bandwidth quantity and the total expected bandwidth quantity. An exemplary adjustment scheme may be:
calculating, under a first type of storage units, required bandwidth increment quantities respectively, where for each of the first type of the storage units, a total expected bandwidth quantity is greater than an original bandwidth quota, and an actual bandwidth quantity reaches the original bandwidth quota;
calculating, under a second type of storage units, supported bandwidth reduction quantities respectively, where for each of the second type of the storage units, an actual bandwidth quantity is less than an original bandwidth quota;
in a case that a total value of the bandwidth increment quantities corresponding to the first type of the storage units is less than a total value of the bandwidth reduction quantities corresponding to the second type of the storage units, adjusting the bandwidth quota of each of the first type of the storage units to the total expected bandwidth quantity, and adjusting the bandwidth quota of each of the second type of the storage units to the actual bandwidth quantity.

Here, in this exemplary adjustment scheme, the bandwidth increment quantity of each of the first type of the storage units may be calculated separately, where the bandwidth increment quantity = the total expected bandwidth quantity - the original bandwidth quota. And the bandwidth increment quantities respectively corresponding to the first type of the storage units are summed, to obtain the total value of the bandwidth increment quantities corresponding to the first type of the storage units. Similarly, the bandwidth reduction quantity corresponding to each of the second type of the storage units may also be calculated, where the bandwidth reduction quantity = the original bandwidth quota - the actual bandwidth quantity. And the bandwidth reduction quantities respectively corresponding to the second type of the storage units are summed, to obtain the total value of the bandwidth reduction quantities corresponding to the second type of the storage units.

In this exemplary scheme, the first type of the storage units and the second type of the storage units may be found from the storage units of the data lake, respectively. Specifically, a storage unit with a total expected bandwidth quantity greater than an original bandwidth quota and an actual bandwidth quantity reaching the original bandwidth quota is found as a first type of storage unit. Taking the above dynamic adjustment record table as an example, the A-bucket 1 and the A-bucket 2 in the table are the first type of the storage units. A storage unit with an actual bandwidth quantity less than an original bandwidth quota is found as a second type of storage unit. Taking the above dynamic adjustment record table as an example, the B- bucket 3, the B-bucket 4, the C-bucket 5 and the C-bucket 6 in the table are the second type of the storage units.

The dynamic adjustment node will increase the bandwidth quotas of the first type of the storage units and decrease the bandwidth quotas of the second type of the storage units. In this process, a relationship between the total value of the bandwidth increment quantities corresponding to the first type of the storage units and the total value of the bandwidth reduction quantities corresponding to the second type of the storage units needs to be considered. In the case that the total value of the bandwidth increment quantities corresponding to the first type of the storage units is less than the total value of the bandwidth reduction quantities corresponding to the second type of the storage units, it represents that the bandwidth resource that can be released by the second type of the storage units can meet the requirement of the bandwidth increment quantities for the first type of the storage units. Therefore, the bandwidth quota of each of the first type of the storage units may be adjusted to the total expected bandwidth quantity and the bandwidth quota of each of the second type of the storage units may be adjusted to the actual bandwidth quantity.

However, in a case that the total value of the bandwidth increment quantities corresponding to the first type of the storage units is greater than the total value of the bandwidth reduction quantities corresponding to the second type of the storage units, an incremental coefficient may be calculated according to a current remaining bandwidth quantity of the data lake and the total value of the bandwidth increment quantities; the bandwidth quota of each of the first type of the storage units is adjusted according to the incremental coefficient and the total expected bandwidth quantity. Exemplarily, it may be that the increment coefficient = (the current remaining bandwidth quantity of the data lake + the total value of the bandwidth reduction quantities corresponding to the second type of the storage units) / the value of the bandwidth increment quantities. It should be understood that, in this embodiment, in the case that the total value of the bandwidth increment quantities corresponding to the first type of the storage units is greater than the total value of the bandwidth reduction quantities corresponding to the second type of the storage units, it represents that the bandwidth resource that can be released by the second type of the storage units cannot meet the requirement of the bandwidth increment quantities for the first type of the storage units, and that newly increased bandwidth pressure appears in the data lake. The inventive concept here is that the dynamic adjustment node adjusts the bandwidth quotas of the first type of the storage units according to a bandwidth service upper limit of the data lake, ensuring that the adjusted bandwidth quotas will not cause the total bandwidth quantity configured in the data lake to exceed the bandwidth service upper limit of the data lake, and it is not limited to the implementation of the above-mentioned incremental coefficient. In addition, the scheme for calculating the increment coefficient is not limited to the above specific logic, and this embodiment does not impose any limitation on this.

So far, the bandwidth quotas corresponding to the storage units in the data lake may be dynamically adjusted.

In this embodiment, the bandwidth adjustment system may further include an execution node, where the execution node may obtain the adjusted bandwidth quota of each of the storage units from the dynamic adjustment node, and send the bandwidth quota to the flow control system in the data lake, so that the flow control system adjusts the bandwidth quantities of the computing nodes carried by each of the storage units according to the bandwidth quota of the each of the storage units.

In addition, the execution node may further determine a tenant to which the storage units belong, and calculate, under each tenant, a sum value of the obtained bandwidth quotas of used storage units, as a tenant-level bandwidth quota. Here, there is a special case mentioned above, that is, a case that multiple tenants are carried on a same storage unit. In this case, the execution node may separately determine, based on the aforementioned bandwidth preemption logic, the bandwidth quota that can be allocated for each of the multiple tenants on the storage unit, and the allocated bandwidth quota may be incorporated into the tenant-level bandwidth quota.

Optionally, the execution node may maintain a bandwidth quota record table, where the bandwidth quota record table may include, but is not limited to, a configuration level field, a tenant identifier field, a storage unit identifier field, a bandwidth quota field, and the like. Here, the execution node may update, after the bandwidth quotas adjusted at this time take effect, the bandwidth quotas in the bandwidth quota record table into the original bandwidth quota field in the above-mentioned dynamic adjustment record table in time, for the use by the dynamic adjustment node in the next adjustment stage. An exemplary bandwidth quota record table is as follows, Table-3:

| Configuration level | Tenant | Bucket | Bandwidth quota |
|---|---|---|---|
| Tenant level | Tenant A | None | 50 |
| Bucket level | Tenant A | A-bucket 1 | 20 |
| Bucket level | Tenant A | A-bucket 2 | 30 |
| ... | | | |
| Tenant level | Tenant B | None | 40 |
| Bucket level | Tenant B | B-bucket 3 | 20 |
| Bucket level | Tenant B | B-bucket 4 | 20 |

Based on this, the bandwidth quotas of the storage units in the data lake can be dynamically adjusted, and the adjusted bandwidth quotas are adapted to the bandwidth requirements of the computing nodes carried thereon. As for how to allocate the bandwidth quota on the storage unit between the computing nodes carried on the storage unit, it can be ensured that each of the computing nodes obtains a required bandwidth quantity, by setting a bandwidth preemption mechanism, an average allocation mechanism, a bandwidth balancing mechanism, etc., which is not limited in this embodiment.

To sum up, in this embodiment, the bandwidth adjustment system applied to the data lake scenario is provided, where statistics may be performed on the property description information of the computing nodes currently accessing the data lake, and the expected bandwidth quantities of the respective computing nodes may be predicted; under each storage unit in the data lake, the total expected bandwidth quantity corresponding to the computing nodes currently carried by the storage unit may be calculated, and the bandwidth quota of the storage unit may be adjusted according to the total expected bandwidth quantity and the current actual bandwidth quantity of the storage unit. In this way, the bandwidth adjustment system, serving as an intermediary between the computing nodes and the data lake, can perceive dynamic bandwidth requirements of the computing nodes accessing the data lake in real time, and can adjust the bandwidth quotas of the storage units in the data lake based on the perceived dynamic bandwidth requirements. Accordingly, in the embodiment of the present application, the bandwidth adjustment system can dynamically adjust the bandwidth quotas of the respective storage units in the data lake, so that the bandwidth quantities provided by the storage units in the data lake are adapted to the bandwidth requirements of the computing nodes, thereby providing bandwidths for the computing nodes accessing the data lake more reasonably.

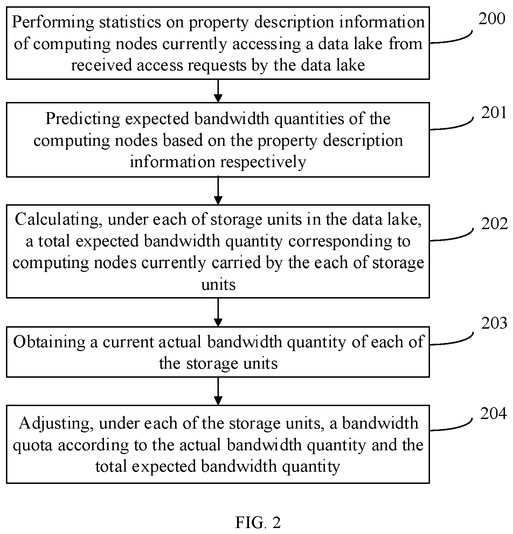

FIG. 2 is a schematic flow diagram of a bandwidth adjustment method provided in another exemplary embodiment of the present application, and the method may be implemented by the foregoing bandwidth adjustment system. Referring to FIG. 2, the method may include:
step 200, performing statistics on property description information of computing nodes currently accessing a data lake from received access requests by the data lake;
step 201, predicting expected bandwidth quantities of the computing nodes based on the property description information respectively;
step 202, calculating, under each of storage units in the data lake, a total expected bandwidth quantity corresponding to computing nodes currently carried by the each of the storage units;
step 203, obtaining a current actual bandwidth quantity of each of the storage units;
step 204, adjusting, under each of the storage units, a bandwidth quota according to the actual bandwidth quantity and the total expected bandwidth quantity.

In an optional embodiment, the property description information includes one or more of an identifier of a belonged-to tenant, an identifier of an accessed storage unit, a node type, or a node address.

In an optional embodiment, the step of calculating the expected bandwidth quantities of the computing nodes based on the property description information respectively includes:
obtaining, based on a node type of any target node in the computing nodes, a hardware parameter of the target node;
calculating a first predicted bandwidth quantity of the target node according to the hardware parameter;
perceiving a type of an application that initiates a current access request on the target node;
looking up a second predicted bandwidth quantity corresponding to a combination of the type of the application and the node type of the target node from a knowledge database;
determining an expected bandwidth quantity corresponding to the target node according to the first predicted bandwidth quantity and the second predicted bandwidth quantity.

In an optional embodiment, the method may further include:
maintaining an access request statistical table, where the access request statistical table includes a field related to a property description and a field corresponding to an expected bandwidth quantity;
dynamically updating the property description information and the expected bandwidth quantities of the computing nodes accessing the data lake in the access request statistical table.

In an optional embodiment, the method may further include:
in a case of detecting a change in the access request statistical table, triggering an operation of calculating, under each of the storage units in the data lake, the total expected bandwidth quantity corresponding to the computing nodes currently carried by the each of the storage units and subsequent operations.

In an optional embodiment, the step of calculating, under each of the storage units in the data lake, the total expected bandwidth quantity corresponding to the computing nodes currently carried by the each of the storage units includes:
calculating, under a target unit in the storage units, a sum of expected bandwidth quantities of all computing nodes currently carried by the target unit, and taking the sum as a total expected bandwidth quantity corresponding to the target unit.

In an optional embodiment, the step of adjusting, under each of the storage units, the bandwidth quota according to the actual bandwidth quantity and the total expected bandwidth quantity includes:
calculating, under a first type of storage units, required bandwidth increment quantities respectively, where for each of the first type of the storage units, a total expected bandwidth quantity is greater than an original bandwidth quota, and an actual bandwidth quantity reaches the original bandwidth quota;
calculating, for a second type of storage units, supported bandwidth reduction quantities respectively, where for each of the second type of the storage units, an actual bandwidth quantity is less than an original bandwidth quota;
in a case that a total value of the bandwidth increment quantities corresponding to the first type of the storage units is less than a total value of the bandwidth reduction quantities corresponding to the second type of the storage units, adjusting the bandwidth quota of each of the first type of the storage units to the total expected bandwidth quantity, and adjusting the bandwidth quota of each of the second type of the storage units to the actual bandwidth quantity.

In an optional embodiment, the method may further include:
in a case that the total value of the bandwidth increment quantities corresponding to the first type of the storage units is greater than the total value of the bandwidth reduction quantities corresponding to the second type of the storage units, calculating an incremental coefficient according to a current remaining bandwidth quantity of the data lake and the total value of the bandwidth increment quantities, where the incremental coefficient is less than 1;
adjusting the bandwidth quota of each of the first type of the storage units according to the incremental coefficient and the total expected bandwidth quantity.

In an optional embodiment, the method may further include:
determining a tenant to which the storage units belong;
calculating, under each tenant, a sum value of obtained bandwidth quotas of used storage units, as a tenant-level bandwidth quota.

In an optional embodiment, the method may further include:
sending a latest bandwidth quota obtained under each of the storage units to a flow control system in the data lake, so that the flow control system adjusts bandwidth quantities of the carried computing nodes according to the bandwidth quota of each of the storage units.

Accordingly, this embodiment provides the bandwidth adjustment method applied to the data lake scenario, where statistics may be performed on the property description information of the computing nodes currently accessing the data lake, and the expected bandwidth quantities of the respective computing nodes may be predicted; under each storage unit in the data lake, the total expected bandwidth quantity corresponding to the computing nodes currently carried by the storage unit may be calculated, and the bandwidth quota of the storage unit may be adjusted according to the total expected bandwidth quantity and the current actual bandwidth quantity of the storage unit. In this way, the bandwidth adjustment system, serving as an intermediary between the computing nodes and the data lake, can perceive dynamic bandwidth requirements of the computing nodes accessing the data lake in real time, and can adjust the bandwidth quotas of the storage units in the data lake based on the perceived dynamic bandwidth requirements. Accordingly, in the embodiment of the present application, the bandwidth adjustment system can dynamically adjust the bandwidth quotas of the respective storage units in the data lake, so that the bandwidth quantities provided by the storage units in the data lake are adapted to the bandwidth requirements of the computing nodes, thereby providing bandwidths for the computing nodes accessing the data lake more reasonably.

Hereinafter, the bandwidth adjustment method is divided into a statistics stage, a dynamic adjustment stage, and an execution stage, and each stage is described with an example separately.

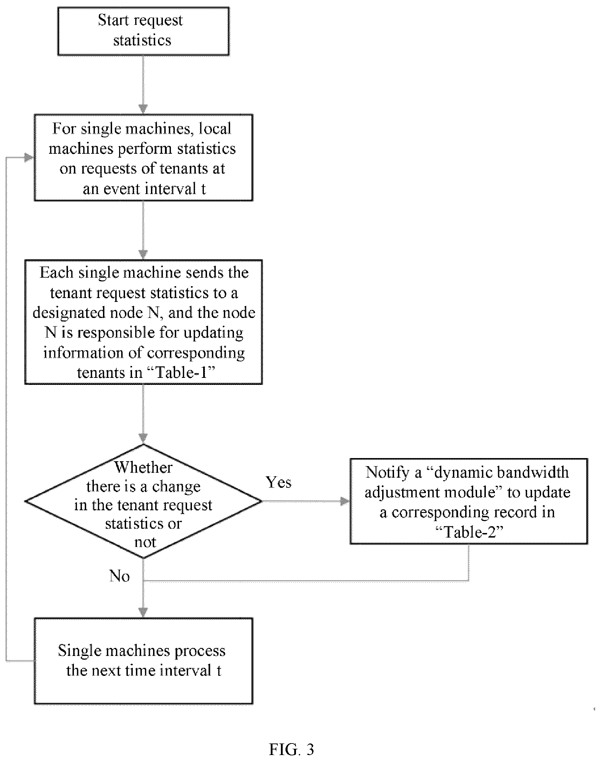

FIG. 3 is a schematic flow diagram for a statistics stage provided in still another exemplary embodiment of the present application. Referring to FIG. 3, exemplary processing logic for the statistics stage may include:
1. perform statistics on all requests in a request access layer;
2. for single machines, local machines (nodes in a distributed cluster) perform statistics on requests of tenants at an event interval t;
3. each single machine sends the tenant request statistics to a designated node N, and the node N is responsible for updating information of corresponding tenants in Table-1;
4. whether there is a change in the tenant request statistics or not, if yes, update a corresponding record in Table-2 through a dynamic adjustment node; if no, process the next time interval t at the single machines and return to 2.

In this stage, the access request statistics is performed at a specified frequency, that is, performed at the time interval t. For the statistics, it is independently performed at a large number of single machines in a storage layer and an access layer of the data lake, and the efficiency is improved through localized processing. Then, according to the distribution principle, the designated control nodes are used to process the statistics of specific tenants, and the control nodes are responsible for updating data in Table-1, thus reducing the performance problem caused by the large number of single machines concurrently accessing the Table-1. Table-1 may be stored locally in the control node.

In order to reduce the performance impact of updating Table-2 at every time a change for a tenant occurring, after multiple control nodes have processed information of all tenants, it is determined whether there is an update change in Table-1 as a whole, and if there is a change, the corresponding records in Table-2 are updated in a batch, thereby improving the data exchange efficiency between nodes and reducing the performance impact.

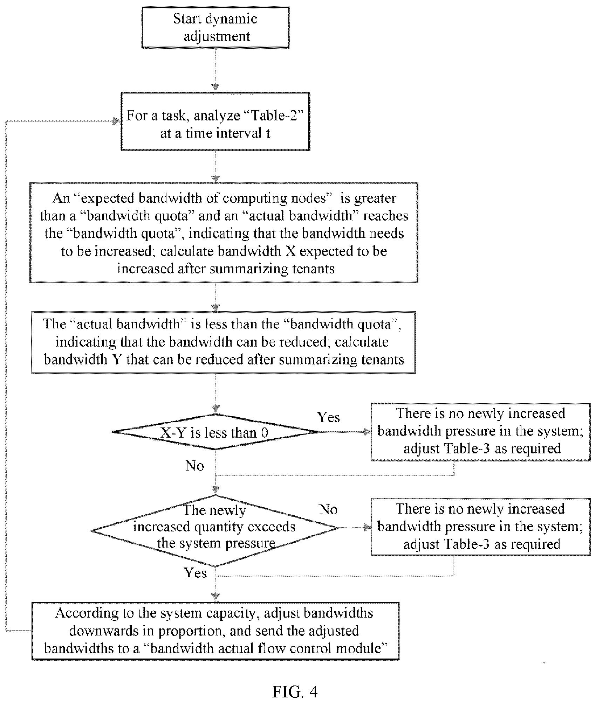

FIG. 4 is a schematic flow diagram for a dynamic adjustment stage provided in still another exemplary embodiment of the present application. Referring to FIG. 4, exemplary processing logic for the dynamic adjustment stage may include:
1. analyze Table-2 at a time interval t';
2. a "total expected bandwidth quantity of computing nodes" is greater than a "bandwidth quota" and an "actual bandwidth" reaches the "bandwidth quota", indicating that the bandwidth needs to be increased; calculate bandwidth X expected to be increased after summarizing tenants;
3. the "actual bandwidth" is less than the "bandwidth quota", indicating that the bandwidth can be reduced; calculate bandwidth Y that can be reduced after summarizing tenants;
4. if X-Y is less than 0, then execute 5; if X-Y is not less than 0, then execute 6;
5. there is no newly increased bandwidth pressure in the system; adjust Table-3 as required;
6. determine whether the newly increased quantity exceeds the system pressure of the data lake, if yes, then execute 7; if no, then execute 8;
7. there is no newly increased bandwidth pressure in the system; adjust Table-3 as required;
8. according to the system capacity, adjust bandwidth increment quantities downwards in proportion, and send the adjusted bandwidth quotas to Table-3.

In this stage, the dynamic adjustment node will scan Table-2 to handle scenarios of increasing and reducing bandwidths:
- analyze the records to find the records with "a total expected bandwidth quantity of computing nodes" greater than "a bandwidth quota" and "an actual bandwidth" reaching "the bandwidth quota", indicating that the bandwidth needs to be increased, and calculate the bandwidth X expected to be increased after summarizing the tenants;
- analyze the table records to find the records with "the actual bandwidth" less than "the bandwidth quota", indicating that the bandwidth can be reduced, and calculate the bandwidth Y that can be reduced after summarizing the tenants;
- then analyze the trend of this round of dynamic adjustment, if "X-Y is less than 0", indicating that there is no newly increased bandwidth pressure in the system, then adjust Table-3 as required; otherwise, indicating that there is newly increased bandwidth pressure in the system, then it is necessary at this time to determine whether the system pressure is exceeded.

If "the newly increased quantity exceeds the system pressure", then the bandwidth increment quantities are adjusted downwards in proportion according to the system capacity, and the adjusted bandwidth quotas are sent to Table-3; otherwise, indicating that there is no newly increased bandwidth pressure in the system, then Table-3 is adjusted as required.

If there is a content update in Table-3, then bandwidth reconfiguration in the system is implemented by a bandwidth actual flow control module.

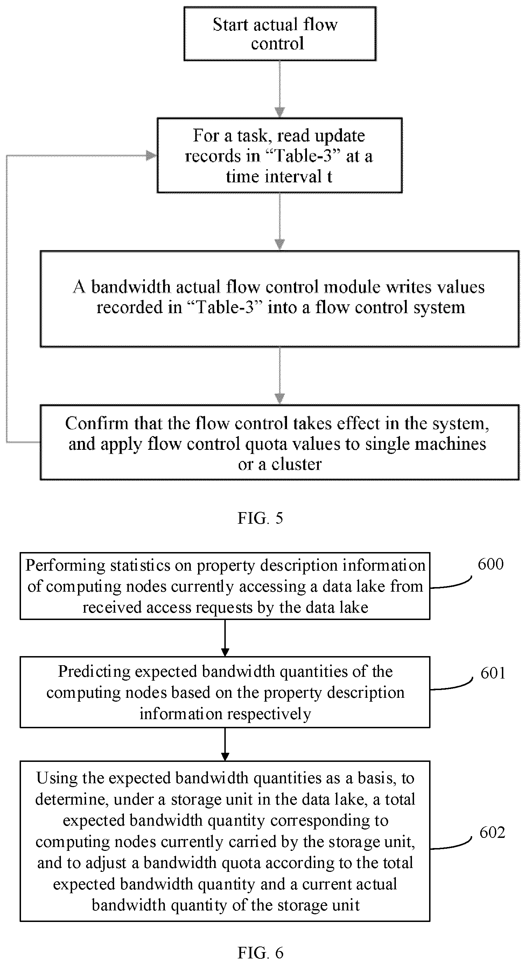

FIG. 5 is a schematic flow diagram for an execution stage provided in still another exemplary embodiment of the present application. Referring to FIG. 5, exemplary processing logic for the execution stage may include:
1. an execution node reads update records in Table-3 at a time interval t";
2. a bandwidth actual flow control module writes values recorded in Table-3 into a flow control system;
3. confirm that the flow control takes effect in the system, and apply flow control quota values to single machines or a cluster.

Through the above process, it can be realized that the bandwidths are dynamically adjusted according to the elastic scaling of the computing nodes, and the computing capability is fully utilized, rendering the use of the computing engines more conveniently.

To sum up, the bandwidth adjustment solutions provided in the embodiments can produce beneficial effects in at least the following aspects.

The fields of the access request statistical table in a tenant level are defined. Through the table, information on the nodes and expected bandwidths can be mastered, to help the subsequent bandwidth dynamic adjustment.

The tenant-level access request statistics is performed at single machines locally, and the tenant records are updated in the manner of agent nodes updating the table, to reduce the concurrency impact and improve the system performance.

The dynamic adjustment node can implement the bandwidth dynamic adjustment according to the increased/reduced bandwidth requirements and in combination with the system bandwidth capacity, to meet the business requirements flexibly.

The dynamic adjustment node updates the table according to actual changes, thereby realizing table update with minimum granularity and reducing the performance problem caused by fields being processed in a large scale.

The execution node can ensure the validity of the configuration through two stages of writing and confirmation.

It should be noted that, an execution entity of each of the steps of the method provided in the foregoing embodiments may be a same device, or different devices may be taken as execution entities of the method. For example, the execution entity of step 200 to step 204 may be device A. For another example, the execution entity of steps 200 and 201 may be device A, and the execution entity of step 202 to step 204 may be device B. So on so forth.

In addition, in some processes described in the foregoing embodiments and the drawings, multiple operations occurring in a specific order are included, but it should be clearly understood that these operations may not be performed in the order in which they appear herein or performed in parallel. Sequence numbers of the operations, such as 201 and 202, are merely used to distinguish different operations, and the sequence numbers themselves do not represent any execution order. In addition, these processes may include more or fewer operations, and these operations may be performed sequentially or in parallel. It should be noted that the descriptions such as "first" and "second" herein are used to distinguish different storage units, etc., which do not represent a sequence, and do not limit that the "first" and the "second" are different types.

It should be noted that, for technical details in the foregoing embodiments of the bandwidth adjustment method, reference can be made to related descriptions in the foregoing system embodiments. To save space, details are not described herein again, but this should not cause loss of the protection scope of the present application.

In other possible designs, FIG. 6 is a schematic flow diagram of a bandwidth adjustment method provided in still another exemplary embodiment of the present application. Referring to FIG. 6, in these possible designs, the method may include:
step 600, performing statistics on property description information of computing nodes currently accessing a data lake from received access requests by the data lake;
step 601, predicting expected bandwidth quantities of the computing nodes based on the property description information respectively;
step 602, using the expected bandwidth quantities as a basis, to determine, under a storage unit in the data lake, a total expected bandwidth quantity corresponding to computing nodes currently carried by the storage unit in the data lake, and to adjust a bandwidth quota according to the total expected bandwidth quantity and a current actual bandwidth quantity of the storage unit.

Here, the property description information may include one or more of an identifier of a belonged-to tenant, an identifier of an accessed storage unit, a node type, or a node address.

Here, the step of calculating the expected bandwidth quantities of the computing nodes based on the property description information respectively may include:
obtaining, based on a node type of any target node in the computing nodes, a hardware parameter of the target node;
calculating a first predicted bandwidth quantity of the target node according to the hardware parameter;
perceiving a type of an application that initiates a current access request on the target node;
looking up a second predicted bandwidth quantity corresponding to a combination of the type of the application and the node type of the target node from a knowledge database;
determining an expected bandwidth quantity corresponding to the target node according to the first predicted bandwidth quantity and the second predicted bandwidth quantity.

Optionally, the method may further include:
maintaining an access request statistical table, where the access request statistical table includes a field related to a property description and a field corresponding to an expected bandwidth quantity;
dynamically updating the property description information and the expected bandwidth quantities of the computing nodes accessing the data lake in the access request statistical table.

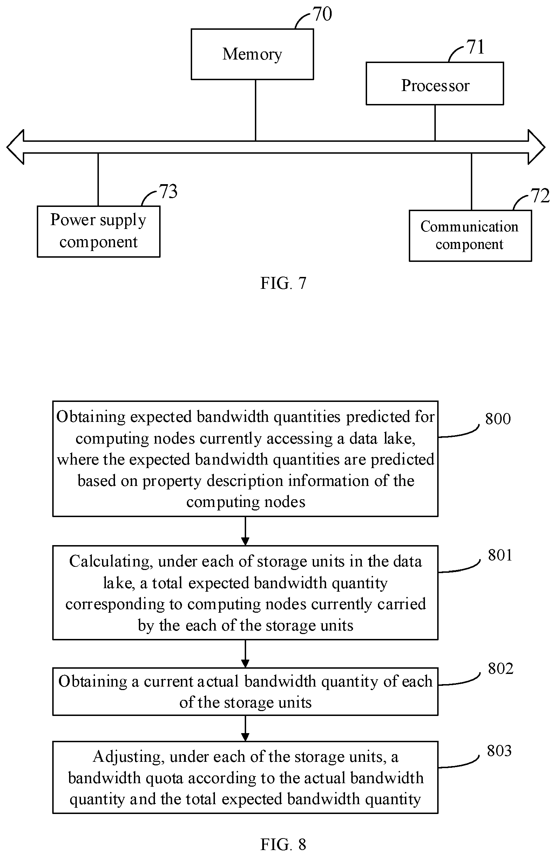

FIG. 7 is a schematic structural diagram of an electronic device provided in still another exemplary embodiment of the present application. Referring to FIG. 7, the electronic device may include a memory 70, a processor 71, a communication component 72, a power supply component 73, and the like. The method related to FIG. 6 may be implemented by the electronic device, and the electronic device may be a cloud server, a cloud node, a server cluster, or the like. A physical implementation form of the electronic device is not limited. For different physical implementation forms, the components in the electronic device may also be implemented according to corresponding deployment requirements, and details are not described herein again.

It is worth noting that the bandwidth adjustment method shown in FIG. 6 can be implemented independently without being limited by other system participants. In addition, the expected bandwidth quantity generated in the bandwidth adjustment method shown in FIG. 6 can also be applied to other application scenarios in addition to the bandwidth adjustment scenario, which is not limited in the embodiments.

In other possible designs, FIG. 8 is a schematic flow diagram of another bandwidth adjustment method provided in still another exemplary embodiment of the present application. Referring to FIG. 8, in these possible designs, the method may include:
step 800, obtaining expected bandwidth quantities predicted for computing nodes currently accessing a data lake, where the expected bandwidth quantities are predicted based on property description information of the computing nodes;
step 801, calculating, under each of storage units in the data lake, a total expected bandwidth quantity corresponding to computing nodes currently carried by the each of the storage units;
step 802, obtaining a current actual bandwidth quantity of each of the storage units;
step 803, adjusting, under each of the storage units, a bandwidth quota according to the actual bandwidth quantity and the total expected bandwidth quantity.

Here, the step of calculating, under each of the storage units in the data lake, the total expected bandwidth quantity corresponding to the computing nodes currently carried by the each of the storage units in the data lake may include:
calculating, under a target unit in the storage units, a sum of expected bandwidth quantities of all computing nodes currently carried by the target unit, and taking the sum as a total expected bandwidth quantity corresponding to the target unit.

Here, the step of adjusting, under each of the storage units, the bandwidth quota according to the actual bandwidth quantity and the total expected bandwidth quantity may include:
calculating, under a first type of storage units, required bandwidth increment quantities respectively, where for each of the first type of the storage units, a total expected bandwidth quantity is greater than an original bandwidth quota, and an actual bandwidth quantity reaches an original bandwidth quota;
calculating, under a second type of storage units, supported bandwidth reduction quantities respectively, where for each of the second type of the storage units, an actual bandwidth quantity is less than an original bandwidth quota;
in a case that a total value of the bandwidth increment quantities corresponding to the first type of the storage units is less than a total value of the bandwidth reduction quantities corresponding to the second type of the storage units, adjusting the bandwidth quota of each of the first type of the storage units to the total expected bandwidth quantity, and adjusting the bandwidth quota of each of the second type of the storage units to the actual bandwidth quantity.

Optionally, the method may further include:
in a case that the total value of the bandwidth increment quantities corresponding to the first type of the storage units is greater than the total value of the bandwidth reduction quantities corresponding to the second type of the storage units, calculating an incremental coefficient according to a current remaining bandwidth quantity of the data lake and the total value of the bandwidth increment quantities, where the incremental coefficient is less than 1;
adjusting the bandwidth quota of each of the first type of the storage units according to the incremental coefficient and the total expected bandwidth quantity.

Optionally, the method further includes:
determining a tenant to which the storage units belong;
calculating, under each tenant, a sum value of obtained bandwidth quotas of used storage units, as a tenant-level bandwidth quota.

Optionally, the method further includes:
sending a latest bandwidth quota obtained under each of the storage units to a flow control system in the data lake, so that the flow control system adjusts bandwidth quantities of the carried computing nodes according to the bandwidth quota of each of the storage units.

Based on the schematic structural diagram of the electronic device provided in FIG. 7, the method related to FIG. 8 may be implemented by the electronic device, and the electronic device may be a cloud server, a cloud node, a server cluster, or the like. A physical implementation form of the electronic device is not limited. It is worth noting that the bandwidth adjustment method shown in FIG. 8 can be implemented independently without being limited by other system participants. In addition, the expected bandwidth quantity required in the bandwidth adjustment method shown in FIG. 8 can be obtained through various possible approaches, and the acquisition approach is not limited in the embodiments.

Correspondingly, an embodiment of the present application further provides a computer-readable storage medium storing a computer program, and when the computer program is executed, the steps that can be performed by an electronic device in the foregoing method embodiments can be implemented.

A person skilled in the art should understand that the embodiments of the present application may be provided as a method, a system, or a computer program product. Therefore, the present application may take the form of an entirely hardware embodiment, an entirely software embodiment, or an embodiment combining software and hardware aspects. Moreover, the present application may take the form of a computer program product implemented on one or more computer-usable storage media (including but not limited to a disk memory, a CD-ROM, an optical memory, etc.) that include computer-usable program code.

The present application is described with reference to flowcharts and/or block diagrams of methods, devices (systems), and computer program products according to the embodiments of the present application. It should be understood that each process and/or block in the flowcharts and/or block diagrams and combinations of processes and/or blocks in the flowcharts and/or block diagrams can be implemented by computer program instructions. These computer program instructions may be provided to a processor of a general-purpose computer, a dedicated computer, an embedded processor, or other programmable data processing devices to generate a machine, so that instructions executed by the processor of the computer or other programmable data processing devices generate an apparatus for implementing functions specified in one or more processes of the flowcharts and/or one or more blocks of the block diagrams.

These computer program instructions may also be stored in a computer-readable memory that can guide a computer or other programmable data processing devices to work in a specific manner, so that the instructions stored in the computer-readable memory generate a manufactured product including an instruction apparatus, where the instruction apparatus implements the functions specified in one or more processes of the flowcharts and/or one or more blocks of the block diagrams.

These computer program instructions may also be loaded onto a computer or other programmable data processing devices, so that a series of operation steps are performed on the computer or other programmable devices to generate computer-implemented processing, so that the instructions executed on the computer or other programmable devices provide the steps for implementing the functions specified in one or more processes of the flowcharts and/or one or more blocks of the block diagrams.

In a typical configuration, a computing device includes one or more processors (CPUs), input/output interfaces, network interfaces, and memories.

The memories may include non-permanent memories, such as a random access memory (RAM), and/or non-volatile memories, such as a read-only memory (ROM) or a flash memory (flash RAM), and/or other forms in computer-readable media. The memory is an example of the computer-readable media.

The computer-readable media include permanent and non-permanent, removable and non-removable media that can implement information storage by any method or technology. The information may be computer-readable instructions, data structures, modules of a program, or other data. Examples of the computer storage media include, but are not limited to, phase change memory (PRAM), static random access memory (SRAM), dynamic random access memory (DRAM), other types of random access memory (RAM), read-only memory (ROM), electrically erasable programmable read-only memory (EEPROM), flash memory or other memory technology, read-only optical disc read-only memory (CD-ROM), digital versatile disc (DVD) or other optical storage, magnetic cassette tape, tape disk storage or other magnetic storage devices or any other non-transmission media that can be used to store information that can be accessed by a computing device. As defined herein, the computer-readable media do not include transitory computer-readable media (transitory media), such as modulated data signals and carrier waves.

It should also be noted that the terms "include", "comprise" or any other variants thereof are intended to cover non-exclusive inclusion, so that a process, method, commodity or device that includes a series of elements not only includes those elements, but also includes other elements that are not explicitly listed, or further includes elements inherent to the process, method, commodity or device. Without further limitations, the element defined by the statement "including one ..." does not exclude the existence of other identical elements in the process, method, commodity, or device that includes said element.

The above descriptions are merely embodiments of the present application, and are not intended to limit the present application. For those skilled in the art, the present application can have various modifications and changes. Any modification, equivalent replacement, improvement and the like made within the spirit and principle of the present application shall be included in the protection scope of the present application.

## Claims

1. A bandwidth adjustment method, comprising:
performing statistics on property description information of computing nodes currently accessing a data lake from received access requests by the data lake;
predicting expected bandwidth quantities of the computing nodes based on the property description information respectively;
using the expected bandwidth quantities as a basis, to determine, under storage units in the data lake, a total expected bandwidth quantity corresponding to computing nodes currently carried by the storage units, and to adjust a bandwidth quota according to the total expected bandwidth quantity and a current actual bandwidth quantity of the storage units.

2. The method according to claim 1, wherein the property description information comprises one or more of an identifier of a belonged-to tenant, an identifier of an accessed storage unit, a node type, or a node address.

3. The method according to claim 2, wherein the calculating the expected bandwidth quantities of the computing nodes based on the property description information respectively comprises:
obtaining, based on a node type of any target node in the computing nodes, a hardware parameter of the target node;
calculating a first predicted bandwidth quantity of the target node according to the hardware parameter;
perceiving a type of an application that initiates a current access request on the target node;
looking up a second predicted bandwidth quantity corresponding to a combination of the type of the application and the node type of the target node from a knowledge database;
determining an expected bandwidth quantity corresponding to the target node according to the first predicted bandwidth quantity and the second predicted bandwidth quantity.

4. The method according to claim 1, further comprising:
maintaining an access request statistical table, wherein the access request statistical table comprises a field related to a property description and a field corresponding to an expected bandwidth quantity;
dynamically updating the property description information and the expected bandwidth quantities of the computing nodes accessing the data lake in the access request statistical table.

5. A bandwidth adjustment method, comprising:
obtaining expected bandwidth quantities predicted for computing nodes currently accessing a data lake, wherein the expected bandwidth quantities are predicted based on property description information of the computing nodes;
calculating, under each of storage units in the data lake, a total expected bandwidth quantity corresponding to computing nodes currently carried by the each of the storage units;
obtaining a current actual bandwidth quantity of each of the storage units;
adjusting, under each of the storage units, a bandwidth quota according to the actual bandwidth quantity and the total expected bandwidth quantity.

6. The method according to claim 5, wherein the calculating, under each of the storage units in the data lake, the total expected bandwidth quantity corresponding to the computing nodes currently carried by the each of the storage units in the data lake comprises:
calculating, under a target unit in the storage units, a sum of expected bandwidth quantities of all computing nodes currently carried by the target unit, and taking the sum as a total expected bandwidth quantity corresponding to the target unit.

7. The method according to claim 5, wherein the adjusting, under each of the storage units, the bandwidth quota according to the actual bandwidth quantity and the total expected bandwidth quantity comprises:
calculating, under a first type of storage units, required bandwidth increment quantities respectively, wherein for each of the first type of the storage units, a total expected bandwidth quantity is greater than an original bandwidth quota, and an actual bandwidth quantity reaches the original bandwidth quota;
calculating, under a second type of storage units, supported bandwidth reduction quantities respectively, wherein for each of the second type of the storage units, an actual bandwidth quantity is less than an original bandwidth quota;
in a case that a total value of the bandwidth increment quantities corresponding to the first type of the storage units is less than a total value of the bandwidth reduction quantities corresponding to the second type of the storage units, adjusting the bandwidth quota of each of the first type of the storage units to the total expected bandwidth quantity, and adjusting the bandwidth quota of each of the second type of the storage units to the actual bandwidth quantity.

8. The method according to claim 7, further comprising:
in a case that the total value of the bandwidth increment quantities corresponding to the first type of the storage units is greater than the total value of the bandwidth reduction quantities corresponding to the second type of the storage units, calculating an incremental coefficient according to a current remaining bandwidth quantity of the data lake and the total value of the bandwidth increment quantities, wherein the incremental coefficient is less than 1;
adjusting bandwidth quotas of the first type of the storage units according to the incremental coefficient and the total expected bandwidth quantity.

9. The method according to claim 5, further comprising:
determining tenants to which the storage units belong;
calculating, under each of the tenants, a sum value of obtained bandwidth quotas of used storage units, as a tenant-level bandwidth quota.

10. The method according to claim 5, further comprising:
sending a latest bandwidth quota obtained under each of the storage units to a flow control system in the data lake, so that the flow control system adjusts bandwidth quantities of the carried computing nodes according to the bandwidth quota of each of the storage units.

11. An electronic device, comprising a memory and a processor;
the memory is configured to store one or more computer instructions;
the processor is coupled to the memory, and is configured to execute the one or more computer instructions to:
perform statistics on property description information of computing nodes currently accessing a data lake from received access requests by the data lake;
predict expected bandwidth quantities of the computing nodes based on the property description information respectively;
use the expected bandwidth quantities as a basis, to determine, under storage units in the data lake, a total expected bandwidth quantity corresponding to computing nodes currently carried by the storage units, and to adjust a bandwidth quota according to the total expected bandwidth quantity and a current actual bandwidth quantity of the storage units.

12. An electronic device, comprising a memory and a processor;
the memory is configured to store one or more computer instructions;
the processor is coupled to the memory, and is configured to execute the one or more computer instructions to:
obtain expected bandwidth quantities predicted for computing nodes currently accessing a data lake, wherein the expected bandwidth quantities are predicted based on property description information of the computing nodes;
calculate, under each of storage units in the data lake, a total expected bandwidth quantity corresponding to computing nodes currently carried by the each of the storage units;
obtain a current actual bandwidth quantity of each of the storage units;
adjust, under each of the storage units, a bandwidth quota according to the actual bandwidth quantity and the total expected bandwidth quantity.

13. A bandwidth adjustment system, comprising:
a statistics node applying the bandwidth adjustment method according to any one of claims 1-4, and a dynamic adjustment node applying the bandwidth adjustment method according to any one of claims 5-10; wherein the statistics node provides the expected bandwidth quantities predicted for the computing nodes accessing the data lake to the dynamic adjustment node, so that the dynamic adjustment node adjusts the bandwidth quota for the storage unit in the data lake.

14. A computer-readable storage medium storing computer instructions, wherein when the computer instructions are executed by one or more processors, the one or more processors are caused to perform the bandwidth adjustment method according to any one of claims 1-10.
